# FASCICULE DE BREVET EUROPEEN

(11) **EP 4 273 661 B1**
(45) Date de publication et mention de la délivrance du brevet: **01.01.2025**
(21) Numéro de dépôt: 23169781.4
(22) Date de dépôt: 25.04.2023
(51) Int. Cl.: G05D 1/00, B64D 43/00, G08G 5/00

(54) **SYSTEME D'AIDE AU SUIVI DE TOURBILLON DE SILLAGE POUR AERONEFS**
SYSTEM ZUR UNTERSTÜTZUNG DER NACHLAUFWIRBELVERFOLGUNG FÜR FLUGZEUGE
WAKE VORTEX TRACKING ASSISTANCE SYSTEM FOR AIRCRAFT

(30) Priorité: 03.05.2022 FR 2204183
(43) Date de publication de la demande: 08.11.2023
(73) Titulaire: Airbus SAS, 31700 Blagnac (FR)
(72) Inventeur: FROT, Clément, 31700 BLAGNAC (FR); TA, Guillaume, 31700 BLAGNAC (FR); ADAMS, Jordan Lee, 31700 BLAGNAC (FR)
(74) Mandataire: Cabinet Le Guen Maillet

(56) Documents cités:
- WO-A1-2022/023574
- US-A1- 2017 293 307
- US-A1- 2019 310 642
- KADEN A, LUCKNER R: "Maneuvers During Automatic Formation Flight of TransportAircraft for Fuel Savings", JOURNAL OF AIRCRAFT, vol. 59, no. 2, 9 November 2021 (2021-11-09), pages 433 - 446, XP002808244, Retrieved from the Internet <URL:https://arc.aiaa.org/doi/pdf/10.2514/1.C036339> [retrieved on 20221213]

## Description

### DOMAINE TECHNIQUE

La présente invention concerne un système d'aide au suivi de tourbillon de sillage pour aéronefs. Plus particulièrement, la présente invention concerne un système d'anticipation de perturbations générées par un tourbillon de sillage (aussi appelé tourbillon marginal), notamment lors d'un vol en formation.

### ETAT DE LA TECHNIQUE ANTERIEURE

Les tourbillons de sillage (« wake vortices » en anglais), aussi appelés « tourbillons marginaux » ou « tourbillons de bouts d'aile » (« wingtip vortices » en anglais), sont des turbulences de sillage contrarotatives aux extrémités des ailes d'un aéronef en vol dues à une différence de pression entre l'intrados et l'extrados des ailes. Les tourbillons de sillage peuvent subsister plusieurs minutes après le passage d'un premier aéronef, et perturber le confort de passagers d'un deuxième aéronef passant à proximité entretemps. Des distances de sécurité entre aéronefs en vol sont appliquées par le contrôle de trafic aérien ATC (« Air Traffic Control » en anglais) pour prendre en compte les tourbillons de sillage et éviter d'éventuelles difficultés de vol liées à leur existence. Il serait souhaitable que ces procédures de contrôle de trafic aérien ATC soient complétées par un système embarqué dans le deuxième aéronef.

Dans un contexte particulier, en formation, un aéronef meneur (« leader aircraft » en anglais) est suivi par un ou plusieurs aéronefs suiveurs (« follower aircraft » en anglais), qui peuvent subir des inconforts liés aux tourbillons de sillage de l'aéronef meneur. Toutefois, en contrôlant leur position par rapport aux tourbillons de sillage, les aéronefs suiveurs peuvent bénéficier d'un phénomène de flux d'air ascendant induit par les tourbillons de sillage, réduisant ainsi traînée et consommation de carburant. Par contre, si les aéronefs suiveurs pénètrent l'espace entre les tourbillons de sillage de l'aéronef meneur, les aéronefs suiveurs subissent un phénomène de flux d'air descendant qui est induit par les tourbillons de sillage et qui nuit à leur performance. De même, des turbulences sont subies par un aéronef suiveur si une de ses ailes pénètre un tourbillon de sillage. Ces turbulences entraînent un inconfort notable pour les passagers de l'aéronef suiveur. Des solutions existent pour permettre à un aéronef suiveur de se positionner, de manière automatique, par rapport à un tourbillon de sillage généré par un aéronef meneur. On peut par exemple se référer à la demande de brevet français FR 3041121 A1. Bien que la solution qui y est divulguée permette à un aéronef suiveur de bénéficier effectivement du phénomène de flux d'air ascendant induit par un tourbillon de sillage d'un aéronef meneur, l'inconfort susmentionné peut être subi par les passagers de l'aéronef suiveur, tout particulièrement à cause d'événements perturbateurs soudains, tels qu'une manoeuvre de l'aéronef meneur, ou un changement de direction ou de gradient de vent.

Par ailleurs, il est connu de la demande de brevet international WO 2022/023574 un procédé visant à obtenir, par un aéronef suiveur, une information sur un tourbillon de sillage (« wake » en anglais) généré par un aéronef meneur.

Il est également connu de la demande de brevet américain US 2019/310642A1 un procédé de détermination d'une trajectoire d'un aéronef suiveur jusqu'à une position optimale par rapport à des tourbillons de sillages (vortices) générés par un aéronef meneur.

Il est alors aussi souhaitable de fournir une solution d'aide au suivi de tourbillon de sillage qui soit adaptée au vol en formation, afin de pallier l'inconfort susmentionné pour les passagers, tout en bénéficiant autant que possible du phénomène de flux d'air ascendant induit par le tourbillon de sillage de l'aéronef meneur.

### EXPOSE DE L'INVENTION

Il est proposé un procédé d'aide au vol en formation d'aéronefs, le procédé étant implémenté par un système sous forme de circuiterie électronique embarquée dans un aéronef agissant comme aéronef suiveur, le procédé comportant les étapes suivantes : obtention d'informations relatives à un aéronef meneur générant un tourbillon de sillage induisant un flux d'air ascendant dont le système vise à faire bénéficier l'aéronef suiveur ; détermination d'un effet du tourbillon de sillage subi par l'aéronef suiveur comme une différence entre mesures, effectuées par des capteurs de l'aéronef suiveur, et une modélisation de l'aéronef suiveur en environnement libre de tourbillon de sillage ; détermination d'une position estimée du tourbillon de sillage à partir des informations relatives à l'aéronef meneur obtenues et d'un modèle de tourbillon de sillage, et détermination d'une incertitude d'estimation autour de la position estimée du tourbillon de sillage à partir de l'effet déterminé du tourbillon de sillage subi par l'aéronef suiveur. Le procédé comporte en outre une étape de détermination de trajectoires comprenant : une première trajectoire, destinée à être suivie par l'aéronef suiveur, en tant que trajectoire d'approche et de suivi du tourbillon de sillage, de sorte à chercher à bénéficier du flux ascendant induit par le tourbillon de sillage tout en restant en dehors d'une fenêtre d'inconfort potentiel définie par l'incertitude d'estimation autour de la position estimée du tourbillon de sillage ; une deuxième trajectoire correspondant à un aéronef fantôme comme si l'aéronef suiveur est en permanence à une position optimale par rapport au tourbillon de sillage, à savoir un placement de l'aéronef suiveur à une distance prédéfinie de la position estimée du tourbillon de sillage lorsque la fenêtre d'inconfort potentiel a des dimensions qui le permettent, et à une marge prédéfinie de la fenêtre d'inconfort potentiel sinon. Et le procédé comporte aussi les étapes suivantes : évaluation de dépassements à venir de l'aéronef fantôme par rapport à des capacités de manoeuvre de l'aéronef suiveur et de règles de confort de passagers, vis-à-vis de la deuxième trajectoire ; modification éventuelle de la première trajectoire, à suivre par l'aéronef suiveur, en fonction des dépassements évalués. Ainsi, grâce à la deuxième trajectoire correspondant à un aéronef fantôme, la trajectoire à suivre par l'aéronef suiveur peut être ajustée en cas d'événements perturbateurs soudains, tels qu'une manoeuvre de l'aéronef meneur, ou un changement de direction ou de gradient de vent, ce qui améliore le confort des passagers de l'aéronef suiveur.

Dans un mode de réalisation particulier, le système évalue sur la première trajectoire si l'aéronef suiveur se rapproche de la fenêtre d'inconfort potentiel en dessous d'un seuil de distance TH_vf, et lorsque ce seuil TH_vf est atteint, le système prend la décision tactique d'éloigner l'aéronef suiveur du tourbillon de sillage de sorte à placer l'aéronef suiveur à une distance minimale du tourbillon de sillage à laquelle l'impact du tourbillon de sillage sur l'aéronef suiveur est nul.

Dans un mode de réalisation particulier, lorsque les dépassements évalués sont inférieurs en magnitude à un seuil TH_os et supérieurs en magnitude à un seuil TH_mos, avec TH_mos < TH_os, le système prend la décision tactique de décaler la position cible pour éloigner l'aéronef suiveur du tourbillon de sillage d'une distance égale à une marge prédéfinie.

Dans un mode de réalisation particulier, si les dépassements évalués deviennent supérieurs ou égaux en magnitude au seuil TH_os, le système prend la décision tactique d'éloigner l'aéronef suiveur du tourbillon de sillage de sorte à placer l'aéronef suiveur à une distance minimale du tourbillon de sillage à laquelle l'impact du tourbillon de sillage sur l'aéronef suiveur est nul.

Dans un mode de réalisation particulier, si malgré la décision tactique d'éloigner l'aéronef suiveur du tourbillon de sillage de sorte à placer l'aéronef suiveur à une distance minimale du tourbillon de sillage à laquelle l'impact du tourbillon de sillage sur l'aéronef suiveur est nul, le système détecte que l'aéronef suiveur se rapproche de la fenêtre d'inconfort potentiel en dessous d'un seuil de distance TH_cr, le système prend la décision tactique d'effectuer une manoeuvre échappatoire.

Dans un mode de réalisation particulier, la manoeuvre échappatoire consiste à plonger pour rejoindre un niveau de vol inférieur.

Dans un mode de réalisation particulier, chaque trajectoire est déterminée par les étapes suivantes : discrétisation temporelle de la trajectoire selon un pas de temps prédéfini, en évaluant un temps total de prédiction disponible correspondant à un temps qui est supposé s'écouler pour que l'aéronef suiveur parcoure en substance la distance correspondant au tourbillon de sillage déjà formé entre l'aéronef meneur et une position courante de l'aéronef suiveur à considérer, de sorte à définir des microcycles itératifs ; et pour chaque microcycle itératif : prédiction d'un état futur de l'aéronef suiveur, à partir d'un état courant de l'aéronef et d'une modélisation de l'aéronef suiveur ; prédiction de la position de l'aéronef suiveur relativement à un référentiel géodésique ; prédiction des positions de l'aéronef suiveur relativement au tourbillon de sillage et de retours de loi.

Dans un mode de réalisation particulier, la position estimée du tourbillon de sillage et l'incertitude d'estimation sur la position estimée du tourbillon de sillage sont déterminées à l'aide d'un filtre bayésien récursif.

Il est aussi proposé un système d'aide au vol en formation d'aéronefs, le système comportant de la circuiterie électronique destinée à être embarquée dans un aéronef agissant comme aéronef suiveur, la circuiterie électronique étant configurée pour implémenter les étapes suivantes : obtention d'informations relatives à un aéronef meneur générant un tourbillon de sillage induisant un flux d'air ascendant dont le système vise à faire bénéficier l'aéronef suiveur ; détermination d'un effet du tourbillon de sillage subi par l'aéronef suiveur comme une différence entre mesures, effectuées par des capteurs de l'aéronef suiveur, et une modélisation de l'aéronef suiveur en environnement libre de tourbillon de sillage ; détermination d'une position estimée du tourbillon de sillage à partir des informations relatives à l'aéronef meneur obtenues et d'un modèle de tourbillon de sillage, et détermination d'une incertitude d'estimation autour de la position estimée du tourbillon de sillage à partir de l'effet déterminé du tourbillon de sillage subi par l'aéronef suiveur. La circuiterie électronique est en outre configurée pour implémenter une étape de détermination de trajectoires comprenant : une première trajectoire, destinée à être suivie par l'aéronef suiveur, en tant que trajectoire d'approche et de suivi du tourbillon de sillage, de sorte à chercher à bénéficier du flux ascendant induit par le tourbillon de sillage tout en restant en dehors d'une fenêtre d'inconfort potentiel définie par une incertitude d'estimation autour de la position estimée du tourbillon de sillage ; une deuxième trajectoire correspondant à un aéronef fantôme comme si l'aéronef suiveur est en permanence à une position optimale par rapport au tourbillon de sillage, à savoir un placement de l'aéronef suiveur à une distance prédéfinie de la position estimée du tourbillon de sillage lorsque la fenêtre d'inconfort potentiel a des dimensions qui le permettent, et à une marge prédéfinie de la fenêtre d'inconfort potentiel sinon. La circuiterie électronique est aussi configurée pour implémenter les étapes suivantes : évaluation de dépassements à venir de l'aéronef fantôme par rapport à des capacités de manoeuvre de l'aéronef suiveur et de règles de confort de passagers, vis-à-vis de la deuxième trajectoire ; modification éventuelle de la première trajectoire, à suivre par l'aéronef suiveur, en fonction des dépassements évalués.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement, en vue de dessus, un aéronef équipé d'un système d'aide au suivi de tourbillon de sillage ;
[Fig. 2] illustre schématiquement un exemple d'architecture matérielle sur laquelle peut reposer le système d'aide au suivi de tourbillon de sillage ;
[Fig. 3] illustre schématiquement, en vue de face, un positionnement d'aéronef suiveur par rapport à un aéronef meneur lors d'un vol en formation ;
[Fig. 4] illustre schématiquement, en vue de dessus, le positionnement d'aéronef suiveur par rapport à l'aéronef meneur lors du vol en formation ;
[Fig. 5] illustre schématiquement une architecture modulaire du système d'aide au suivi de tourbillon de sillage, particulièrement adaptée au vol en formation ;
[Fig. 6] illustre schématiquement un algorithme de contrôle de positionnement de l'aéronef suiveur par rapport à l'aéronef meneur lors du vol en formation ;
[Fig. 7] illustre schématiquement un algorithme de détermination d'une probabilité de présence d'un tourbillon de sillage à une position donnée, dans un mode de réalisation particulier ;
[Fig. 8] illustre schématiquement un exemple de fenêtre d'inconfort potentiel déterminé pour l'aéronef suiveur, dans un mode de réalisation particulier ; et
[Fig. 9] illustre schématiquement un algorithme de détermination de trajectoires, dans un mode de réalisation particulier.

### EXPOSE DETAILLE DE MODES DE REALISATION

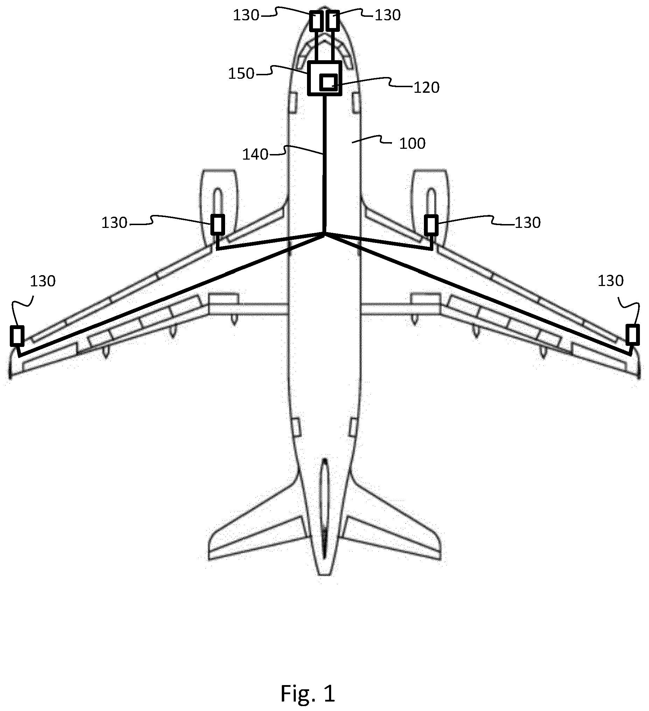

La Fig. 1 illustre schématiquement, en vue de dessus, un aéronef 100 équipé d'un système 120 d'aide au suivi de tourbillon de sillage. Dans un mode de réalisation particulier, détaillé ci-après, le système 120 d'aide au suivi de tourbillon de sillage est inclus dans un système d'aide au vol en formation, plus particulièrement lorsque l'aéronef 100 agit comme suiveur dans le vol en formation, afin de bénéficier d'un phénomène de flux d'air ascendant induit par un tourbillon de sillage d'un aéronef meneur.

Dans un mode de réalisation particulier, le système 120 est intégré à l'avionique 150 de l'aéronef 100.

L'aéronef 100 est équipé de nombreux capteurs 130, comme c'est usuellement le cas en aéronautique : capteurs de température, capteurs de vibrations (par exemple sous forme d'accéléromètres), capteurs de pression, capteurs inertiels... Ces capteurs 130 fournissent des informations, complétées par des informations communiquées par radiofréquence (e.g., communications air-sol ou satellite), permettent à l'avionique 150 de déterminer des paramètres relatifs à l'aéronef 100 en vol (vitesse, attitude, altitude...) et à son environnement (pression atmosphérique, vitesse air...). Chaque capteur 130 est relié à l'avionique 150 par un câblage électrique, ou un système de communication (bus de communication, réseau de communication...) 140, comme montré de manière purement illustrative sur la Fig. 1.

Le système 120 s'appuie sur des informations fournies par l'avionique 150, notamment grâce aux capteurs 130, ainsi que sur des informations fournies par l'aéronef meneur et de modèles préétablis, pour aider l'aéronef 100 à éviter un inconfort pour les passagers de l'aéronef 100 qui serait dû à des turbulences engendrées par un tourbillon de sillage généré par un autre aéronef. Dans un mode de réalisation particulier, comme divulgué par la suite, le système 120 s'appuie sur des informations fournies par l'avionique 150, notamment grâce aux capteurs 130, ainsi que sur des informations fournies par l'aéronef meneur et de modèles préétablis, pour aider à positionner l'aéronef 100, agissant comme aéronef suiveur dans un vol en formation, de sorte à bénéficier du phénomène de flux d'air ascendant susmentionné, sans provoquer d'inconfort pour les passagers de l'aéronef 100.

Dans un mode de réalisation particulier, le système 120 est débrayable et est activé pendant des phases de vol en formation où l'aéronef 100 est suiveur. Par exemple, le système 120 est activé / désactivé sur commande d'un pilote de l'aéronef 100.

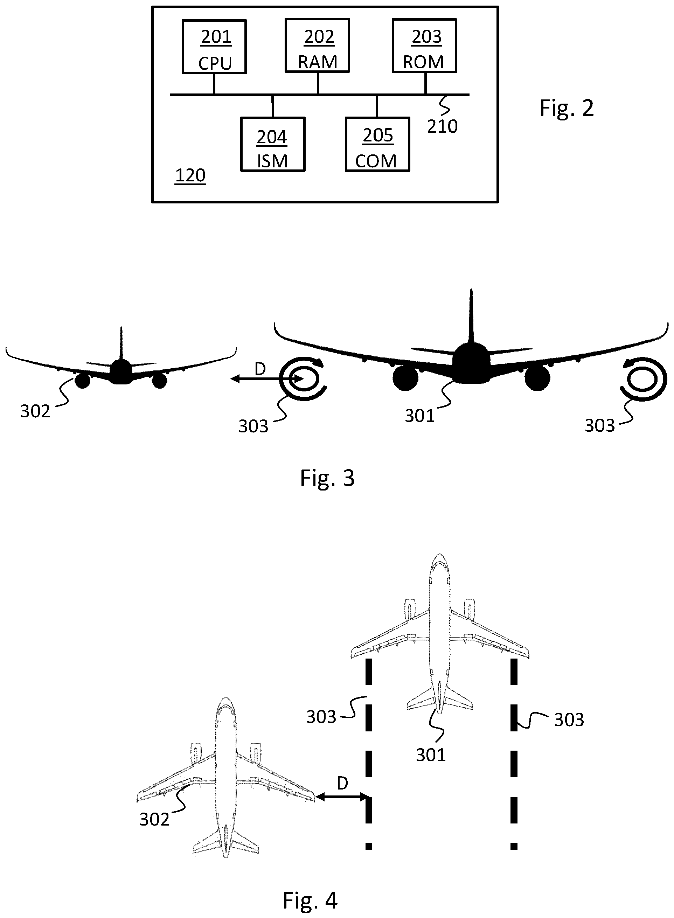

La Fig. 2 illustre schématiquement un exemple d'architecture matérielle sur laquelle peut reposer le système 120.

Le système 120 comprend alors, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203, par exemple une mémoire Flash ; un dispositif de stockage de données, tel qu'un disque dur HDD (« Hard Disk Drive » en anglais), ou un lecteur de support de stockage d'informations ISM (« Information Storage Medium » en anglais) 204, tel qu'un lecteur de cartes SD (« Secure Digital » en anglais) ; au moins une interface de communication 205 permettant au système 120 d'interagir plus particulièrement avec l'avionique 150, ainsi qu'avec l'avionique de l'aéronef meneur ou avec un équipement au sol servant de relais avec l'avionique de l'aéronef meneur.

Le processeur 201 est capable d'exécuter des instructions chargées dans la RAM 202 à partir de la ROM 203, d'une mémoire externe (non représentée), d'un support de stockage, tel qu'une carte SD, ou d'un réseau de communication (non représenté). Lorsque le système 120 est mis sous tension, le processeur 201 est capable de lire de la RAM 202 des instructions et de les exécuter. Ces instructions forment un programme d'ordinateur causant l'implémentation, par le processeur 201, de l'architecture modulaire, des comportements, étapes et algorithmes décrits ici.

Tout ou partie de l'architecture modulaire, des comportements, étapes et algorithmes décrits ici peut ainsi être implémenté sous forme logicielle par exécution d'un ensemble d'instructions par une machine programmable, telle qu'un DSP (« Digital Signal Processor » en anglais) ou un microprocesseur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). Le système 120 comporte donc de la circuiterie électronique agencée et configurée pour implémenter l'architecture modulaire, ainsi que les comportements, étapes et algorithmes décrits ici.

La Fig. 3 illustre schématiquement, en vue de face, un positionnement d'aéronef suiveur 302 par rapport à un aéronef meneur 301 lors d'un vol en formation. Les aéronefs 301 et 302 sont en vol de croisière. Le déplacement de l'aéronef meneur 301 génère des tourbillons de sillage 303. Si l'aéronef suiveur 302 se maintient à une distance D comprise entre une distance seuil minimum Dmin (par exemple, Dmin = 20 mètres) et une distance seuil maximum Dmax (par exemple, Dmax = 30 mètres) des tourbillons marginaux à l'extérieur de la trajectoire de l'aéronef meneur 301, l'aéronef suiveur 302 bénéficie du phénomène de flux d'air ascendant susmentionné, réduisant ainsi traînée et consommation de carburant pour l'aéronef suiveur 302. Entre la distance seuil minimum Dmin et la distance seuil maximum Dmax, placer l'aéronef suiveur 302 à une distance Dconf (par exemple, Dconf = 25 mètres, plus ou moins une marge prédéfinie) permet de bénéficier significativement du phénomène de flux d'air ascendant, tout en assurant le confort des passagers de l'aéronef suiveur 302.

En complément de la Fig. 3, la Fig. 4 illustre schématiquement le positionnement de l'aéronef suiveur 302 par rapport à l'aéronef meneur 301 en vue de dessus.

Les tourbillons de sillage 303 y sont schématiquement représentés de manière simplifiée. En effet, à partir des ailes, les tourbillons de sillage 303 tendent d'abord à se rapprocher l'un de l'autre, puis à maintenir une distance substantiellement constante entre eux, tout en perdant de l'altitude par rapport à celle à laquelle ils ont été générés. De plus, les éventuelles manoeuvres de l'aéronef meneur 301, ainsi que le vent, influent sur la trajectoire et la géométrie des tourbillons de sillage 303 au fil du temps.

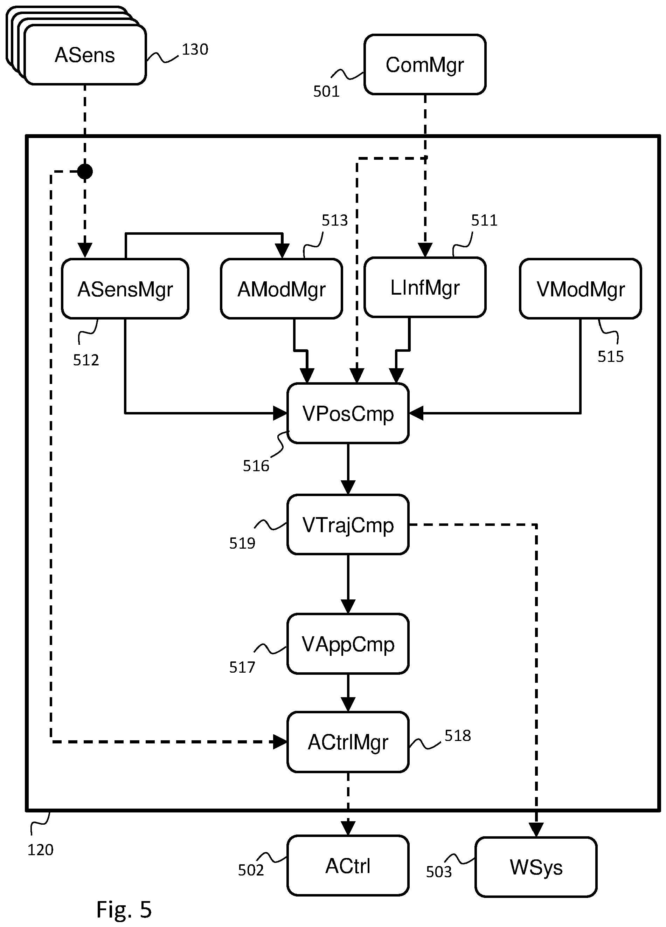

La Fig. 5 illustre schématiquement une architecture modulaire du système 120 adaptée au suivi de tourbillon de sillage, et particulièrement adaptée au vol en formation.

Le système 120 comporte un module gestionnaire de capteurs ASensMgr 512, configuré pour collecter en temps-réel des informations relatives aux mesures effectuées par les capteurs 130 (libellés ASens sur la Fig. 5), incluant des informations de conditions atmosphériques courantes (par exemple, vitesse et direction du vent), ainsi que des informations d'effets subis par l'aéronef suiveur 302 (par exemple, accélération de roulis).

Le système 120 comporte aussi un module gestionnaire d'informations relatives à l'aéronef meneur 301 (envergure, masse, position géographique, vitesse, altitude, attitude, variations de vent subies, dynamique (par exemple, roulis, ...) LInfMgr 511. Lesdites informations incluent des informations de vent subi par l'aéronef meneur 301 (force, direction...). Le module LInfMgr 511 reçoit ces informations, et leurs éventuelles mises à jour en temps réel, en provenance d'un système gestionnaire de communications ComMgr 501 de l'avionique 150 en communication avec un système embarqué de l'aéronef meneur 301, éventuellement via un relais intermédiaire (e.g., système de communication au sol ou système satellitaire).

Le système 120 comporte en outre un module gestionnaire de modèle d'aéronef AModMgr 513, configuré pour déterminer des effets sur l'aéronef suiveur 302 du tourbillon de sillage 303. Le module gestionnaire de modèle d'aéronef AModMgr 513 utilise des mesures fournies par les capteurs ASens130 (par exemple, accélération de roulis) pour déterminer des effets subis par l'aéronef suiveur 302. Le module AModMgr 513 utilise aussi un modèle de l'aéronef suiveur 302, modélisant des effets subis par l'aéronef suiveur 302 en vol hors sillage d'un autre aéronef (par exemple, propriétés aérodynamiques en fonction de la masse de l'aéronef). Par exemple, pour une certaine déflection d'aileron, une certaine accélération de roulis est attendue en environnement libre de tourbillon de sillage généré par un autre aéronef. Ainsi, le module AModMgr 513 est configuré pour déterminer les effets sur l'aéronef suiveur 302 du tourbillon de sillage 303 en soustrayant aux effets mesurés par les capteurs ASens 130 ceux contenus dans ledit modèle de l'aéronef suiveur 302.

Le système 120 comporte en outre un module de calcul de position de tourbillon de sillage VPosCmp 516. Le module VPosCmp 516 est configuré pour estimer une position du tourbillon de sillage 303 avec une incertitude d'estimation, qui peut elle-même être déterminée, et est configuré pour déterminer une fenêtre spatiale, appelée fenêtre d'inconfort potentiel, définie par l'incertitude d'estimation autour de la position estimée du tourbillon de sillage 303. Dans un mode de réalisation particulier, la fenêtre d'inconfort potentiel définit un espace dans lequel le tourbillon de sillage 303 est supposé être présent avec une probabilité supérieure ou égale à un seuil prédéterminé TH_vx.

Outre par le biais de cette fenêtre d'inconfort potentiel qui représente un inconfort subi par les passagers à cause des turbulences induites par le tourbillon de sillage 303, le confort (ou l'inconfort) des passagers est défini en fonction d'un ensemble de règles relatives aux manoeuvres de l'aéronef suiveur 302, notamment le facteur de charge.

Le module VPosCmp 516 calcule pour ce faire une géométrie géoréférencée du tourbillon de sillage 303.

Le module VPosCmp 516 est également configuré pour calculer la géométrie géoréférencée du tourbillon de sillage 303 duquel l'aéronef suiveur 302 peut bénéficier du phénomène de flux d'air ascendant, à partir d'informations relatives à l'aéronef meneur 301 (telles que l'envergure, la masse, la position géographique, la vitesse, l'altitude, l'attitude...) et d'informations relatives aux conditions atmosphériques rencontrées (par exemple, vitesse et direction du vent) par l'aéronef meneur 301 et l'aéronef suiveur 302. Le calcul de la géométrie géoréférencée du tourbillon de sillage 303 est bien connu de l'homme du métier et passe par plusieurs étapes : constructions de positions géoréférencées successives par lesquelles est passé l'aéronef meneur 301, calcul d'une dérive liée au vent, et prise en compte de la physique du tourbillon de sillage avec notamment une vitesse de descente. Le module VPosCmp 516 réalise ainsi une modélisation géoréférencée en trois dimensions, en temps réel, de la géométrie du tourbillon de sillage 303. Ensuite, par projection de la position de l'aéronef suiveur 302 sur des positions calculées du centre du tourbillon de sillage, une distance de l'aéronef suiveur 302 par rapport au tourbillon de sillage peut être calculée. Des détails d'implémentation et de calcul sont par exemple divulgués dans la demande de brevet français FR 3041121 A1 déjà mentionnée.

Pour déterminer la géométrie géoréférencée du tourbillon de sillage 303, le module VPosCmp 516 utilise des données (vitesse de descente...) fournies par un modèle de tourbillon de sillage. Le système 120 comporte alors un module gestionnaire de modèle de tourbillon de sillage VModMgr 515 fournissant au module VPosCmp 516 lesdites données de modèle de tourbillon de sillage.

Le module VPosCmp 516 est ainsi configuré pour déterminer, par exemple à l'aide d'un filtre bayésien récursif, une position estimée du tourbillon de sillage à partir des informations relatives à l'aéronef meneur obtenues et d'un modèle de tourbillon de sillage, et pour déterminer une incertitude d'estimation sur la position estimée du tourbillon de sillage par comparaison de l'effet du tourbillon de sillage 303 subi par l'aéronef suiveur 302 et d'un effet théorique du tourbillon de sillage 303 sur l'aéronef suiveur 302 d'après le modèle de tourbillon de sillage. En effet, du fait notamment d'imprécisions de mesures et/ou d'imprécisions de modèles utilisés, il existe une incertitude concernant la géométrie et le géoréférencement effectifs du tourbillon de sillage 303 calculée et géoréférencée par le module VPosCmp 516 grâce au filtre de type bayésien récursif.

Le module VPosCmp 516 est ainsi configuré pour déterminer la fenêtre d'inconfort potentiel associée à la position estimée du tourbillon de sillage, en fonction de l'incertitude d'estimation sur la position estimée du tourbillon de sillage. Dans un exemple de réalisation, le module VPosCmp 516 détermine la fenêtre d'inconfort potentiel en appliquant une distance dépendante de l'incertitude d'estimation (par exemple, proportionnelle à l'incertitude d'estimation ou linéairement dépendante de l'incertitude d'estimation), autour de la position estimée du tourbillon de sillage 303. Ainsi, plus l'incertitude d'estimation est grande, plus les dimensions de la fenêtre d'inconfort potentiel sont importantes. La précision de l'estimation peut alors être améliorée en gagnant en observabilité, afin de permettre de réduire les dimensions de la fenêtre d'inconfort potentiel.

Dans un autre exemple de réalisation, grâce à un filtre particulaire (« Particle Filter » en anglais), le module VPosCmp 516 détermine l'effet théorique du tourbillon de sillage 303 sur l'aéronef suiveur 302 à différentes positions potentielles dudit tourbillon de sillage 303 au vu de la géométrie géoréférencée précédemment calculée, et compare, pour chaque position parmi lesdites différentes positions potentielles, cet effet théorique avec l'effet sur l'aéronef 302 dudit tourbillon de sillage 303 déterminé par le module AModMgr 513 (par exemple, grâce à des données de moment de tangage). Le module VPosCmp 516 détermine alors une valeur de probabilité de présence du tourbillon de sillage 303 à ladite position. Ainsi, si l'effet théorique est trop faible par rapport à l'effet effectivement subi par l'aéronef suiveur 302 d'après les mesures des capteurs ASens 130, c'est-à-dire que la valeur de probabilité est inférieure au seuil prédéterminé TH_vx, il est peu probable que le tourbillon de sillage 303 se trouve à cette position. La fenêtre spatiale dans laquelle le tourbillon de sillage 303 est supposé être présent avec une probabilité supérieure ou égale au seuil prédéterminé TH_vx est un espace d'inconfort potentiel pour les passagers de l'aéronef suiveur 302, à cause de turbulences qui sont potentiellement subies par l'aéronef suiveur 302 et qui sont dues audit tourbillon de sillage 303. Cette fenêtre spatiale constitue alors la fenêtre d'inconfort potentiel susmentionnée.

Dans un mode de réalisation particulier, le module VPosCmp 516 détermine une valeur de probabilité de présence du tourbillon de sillage 303 à chaque dite position pour différentes caractéristiques de tourbillon de sillage (diamètre de tourbillon, profils de vélocité, profils de circulation...).

En variante du filtre particulaire présenté ci-dessus, le module VPosCmp 516 peut inclure un autre type de filtre bayésien récursif, tel qu'un filtre de Kalman.

D'autres approches pour estimer la position du tourbillon de sillage 303 et l'incertitude d'estimation associée, comme un calcul de gradients locaux, peuvent être dérivées des connaissances générales de l'homme du métier. La position du tourbillon de sillage 303 peut être également obtenue grâce à des mesures directes du tourbillon de sillage 303 (grâce par exemple à une technologie LIDAR (« Light Détection And Ranging » en anglais)) et un modèle de propagation géométrique.

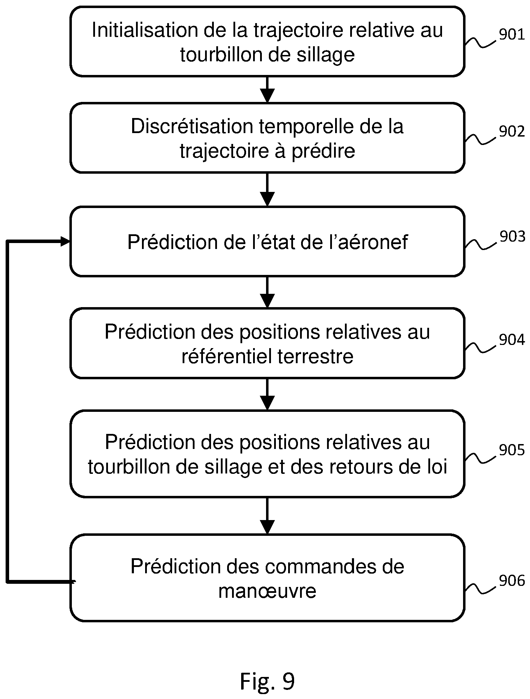

Le module VPosCmp 516 réalise des calculs de distance par rapport au tourbillon de sillage 303 dans un espace en deux dimensions, dans un plan [Y,Z] dans un repère géodésique [X,Y,Z], comme représenté sur la Fig. 9. L'espace en trois dimensions [X,Y,Z] dans lequel est calculée la géométrie géoréférencée du tourbillon de sillage 303 permet d'assurer un suivi de trajectoire, et la coupe transversale dans le plan [Y,Z] est utilisée pour déterminer la fenêtre d'inconfort potentiel, c'est-à-dire la position estimée du tourbillon de sillage 303 en tenant compte des incertitudes de calcul.

Dans un mode de réalisation particulier, le module VPosCmp 516 est composé de deux sous-modules, pour des questions de capacités de calcul : un premier sous-module avec un estimateur grossier de la position du tourbillon de sillage 303 (avec une première précision) et un deuxième sous-module avec un estimateur de raffinement (avec une deuxième précision meilleure que la première précision). Le premier sous-module peut alors effectuer un calcul géométrique qui est relativement grossier ne prenant pas en compte toutes les dynamiques de vent et du tourbillon de sillage. Le second sous-module utilise alors un modèle plus fin, qui s'initialise sur les résultats du premier sous-module, et qui corrige des incertitudes de calculs du premier sous-module au moyen d'un estimateur plus précis (filtre bayésien récursif...).

Le système 120 comporte en outre un module de prédiction VTrajCmp 519. Le module VTrajCmp 519 est configuré pour effectuer différents calculs de trajectoires pour l'aéronef suiveur 302.

En effet, pour pouvoir bénéficier du flux d'air ascendant généré par le tourbillon de sillage 303, le système 120 est configuré pour chercher à entrer dans une phase de suivi (« tracking » en anglais) dans laquelle le système 120 définit les positions successives de la trajectoire de l'aéronef suiveur 302 en respectant les conditions suivantes : lorsque les dimensions de la fenêtre d'inconfort potentiel sont grandes au point que l'aéronef suiveur 302 ne peut pas se placer à la distance Dconf, le système 120 définit la trajectoire de l'aéronef suiveur 302 pour rester à une distance égale à une marge prédéfinie de la fenêtre d'inconfort potentiel ; et lorsque les dimensions de la fenêtre d'inconfort potentiel sont suffisamment petites pour que l'aéronef suiveur 302 puisse se placer à la distance Dconf, le système 120 maintient l'aéronef suiveur 302 à la distance Dconf. Ainsi, l'aéronef suiveur 302 bénéficie du flux d'air ascendant généré par le tourbillon de sillage 303, tout en évitant d'engendrer un inconfort pour les passagers de l'aéronef suiveur 302.

Lorsque l'aéronef suiveur 302 n'est pas en phase de suivi, le système 120 maintient volontairement l'aéronef suiveur 302 éloigné du tourbillon de sillage 303, ou est dans un régime transitoire dans lequel le système 120 applique une trajectoire d'approche du tourbillon de sillage 303. Le système 120 est toutefois configuré pour anticiper des situations nécessitant au contraire de s'éloigner du tourbillon de sillage 303 pour éviter des turbulences liées au tourbillon de sillage 303 qui seraient inconfortables pour les passagers de l'aéronef suiveur 302, et de renoncer alors à cette trajectoire d'approche du tourbillon de sillage 303 ou de s'éloigner encore plus du tourbillon de sillage 303. En effet, il est souhaitable d'anticiper des situations où, par exemple à cause d'un changement de direction ou de force du vent, ou d'une manoeuvre de l'aéronef meneur 301, l'aéronef suiveur 302 ne peut plus être maintenu à la distance DConf de la trajectoire du tourbillon de sillage 303 sans générer d'inconfort pour ses passagers. Ainsi, selon la situation détectée, le système 120 peut renoncer à la trajectoire d'approche et prendre une certaine marge latérale vis-à-vis du tourbillon de sillage 303, ou éloigner l'aéronef suiveur 302 au-delà de la distance seuil Dmax susmentionnée, ou de réaliser une manoeuvre échappatoire par exemple en plongeant. Pour ce faire, le module VTrajCmp 519 est préférentiellement configuré pour calculer des trajectoires candidates adaptées à ces manoeuvres.

Le module VTrajCmp 519 calcule, au moins, deux trajectoires :
- une première trajectoire qui correspond à la trajectoire destinée à être suivie par l'aéronef suiveur 302, la première trajectoire étant composée de positions cibles à atteindre par l'aéronef suiveur 302 relativement aux positions à venir du tourbillon de sillage 303 et ce, dans un intervalle de temps prédéfini immédiatement à venir (temps total de prédiction disponible ; par exemple, les 10 prochaines secondes). Cette première trajectoire est donc initialisée avec la position actuelle de l'aéronef suiveur 302 et la position cible actuelle de l'aéronef suiveur 302. Lorsque le système 120 ne détecte pas de situation ou d'événement impliquant d'appliquer une tactique d'éloignement du tourbillon de sillage 303 comme décrit ci-après, la première trajectoire est calculée en tant que trajectoire d'approche et de suivi du tourbillon de sillage 303.
- une deuxième trajectoire qui correspond à la trajectoire de l'aéronef suiveur 302 comme si l'aéronef suiveur 302 est en permanence à une position optimale (i.e., à la distance Dconf) vis-à-vis du tourbillon de sillage 303. Cette trajectoire correspond donc à un aéronef fantôme (ou virtuel), et est initialisée avec une position optimale (i.e., à la distance Dconf) vis-à-vis du tourbillon de sillage 303 et une position cible maintenant l'aéronef suiveur 302 à la distance Dconf par rapport au tourbillon de sillage 303.

Dans le calcul de la première trajectoire, le module VTrajCmp 519 cherche à maintenir l'aéronef suiveur 302 en dehors de la fenêtre d'inconfort potentiel tout en cherchant à bénéficier du flux d'air ascendant induit par le tourbillon de sillage 303. Typiquement, le module VTrajCmp 519 calcule des positions cibles successives formant la première trajectoire avec les contraintes suivantes :
- ne pas pénétrer dans la fenêtre d'inconfort potentiel (dont les dimensions peuvent évoluer en fonction des nouvelles mesures collectées en temps-réel), tout en cherchant à bénéficier du flux d'air ascendant induit par le tourbillon de sillage ;
- récolter de nouvelles mesures pour permettre de corriger la distribution de probabilités et ainsi d'améliorer les performances d'estimation et de réduire la taille de la fenêtre d'inconfort potentiel ; et
- définir des trajectoires confortables, voire imperceptibles, pour les passagers de l'aéronef suiveur 302.

La deuxième trajectoire permet de séparer le régime transitoire du régime permanent. Par exemple, lorsque l'aéronef suiveur 302 effectue une approche du tourbillon de sillage 303, l'aéronef suiveur 302 est alors en mouvement pour se rapprocher du tourbillon de sillage 303 (en restant en dehors de la fenêtre d'inconfort potentiel). Dans ce cas, on ne peut pas distinguer vis-à-vis de la trajectoire effective de l'aéronef suiveur 302 que les conditions atmosphériques et les mouvements du tourbillon de sillage 303 (par exemple, à cause d'une manoeuvre de l'aéronef meneur 301) sont trop importants pour être absorbés par les lois de contrôle de l'aéronef suiveur 302 sans inconfort pour les passagers de l'aéronef suiveur 302. La deuxième trajectoire permet donc d'évaluer la viabilité du maintien à distance optimale (Dconf) du tourbillon de sillage 303, au sens du confort passager, sans avoir à être physiquement à distance optimale (Dconf) du tourbillon de sillage 303.

Le système 120 comporte en outre un module de gestion de trajectoire VAppCmp 517, pour définir la trajectoire effectivement à suivre par l'aéronef suiveur 302. Le module VAppCmp 517 gère la trajectoire de l'aéronef suiveur 302 de sorte que l'aéronef suiveur 302 reste en dehors de la fenêtre d'inconfort potentiel, tout en cherchant à bénéficier du flux ascendant induit par le tourbillon de sillage 303, et anticipe des situations dans lesquelles l'aéronef suiveur 302 risque de pénétrer dans ladite fenêtre d'inconfort potentiel.

Ainsi, le module VAppCmp 517 est configuré pour prendre les décisions tactiques de commande de l'aéronef suiveur 302, parmi lesquelles : maintenir la première trajectoire, à suivre par l'aéronef suiveur 302, en tant que trajectoire d'approche dudit tourbillon de sillage 303 et de suivi du tourbillon de sillage 303, ou, en cas de situation nécessitant de prendre une décision tactique d'éloignement, de modifier la première trajectoire pour donner plus de marge latérale à la trajectoire effective de l'aéronef suiveur 302 par rapport à celle du tourbillon de sillage 303, ou d'effectuer une manoeuvre échappatoire.

Plus particulièrement, les première et deuxième trajectoires sont utilisées par le module VAppCmp 517 de la façon suivante.

Le module VAppCmp 517 surveille la première trajectoire pour évaluer si l'aéronef suiveur 302 se rapproche, dans l'approche et le suivi du tourbillon de sillage 303, de la fenêtre d'inconfort potentiel en dessous d'un seuil de distance TH_vf. Lorsque ce seuil TH_vf est atteint, le module VAppCmp 517 prend la décision d'éloigner l'aéronef suiveur 302 du tourbillon de sillage 303 de sorte à placer l'aéronef suiveur 302 à une distance minimale du tourbillon de sillage 303 à laquelle l'impact du tourbillon de sillage 303 sur l'aéronef suiveur 302 est nul (à savoir au-delà de la distance seuil Dmax susmentionnée). Par exemple, le module VAppCmp 517 sélectionne une trajectoire candidate, à appliquer à la première trajectoire, pour ce faire. On parle alors de vol « vortex free ». On évite ainsi le passage sous le seuil TH_vf afin de limiter le risque d'entrer dans la fenêtre d'inconfort potentiel et générer un inconfort passager.

Comme déjà indiqué, la deuxième trajectoire correspond à un aéronef virtuel, ou aéronef fantôme, comme si l'aéronef suiveur 302 était à la distance optimale Dconf par rapport au tourbillon de sillage 303. A l'aide de la deuxième trajectoire, le module VAppCmp 517 évalue des dépassements à venir (« overshoot » en anglais) de l'aéronef fantôme par rapport à la position cible en fonction des capacités de manoeuvre de l'aéronef suiveur 302 et des règles de confort de ses passagers, tels que, sans s'y restreindre, des dépassements horizontaux (Y), verticaux (Z), en roulis (phi), en vitesse verticale (Vz), de cet aéronef virtuel vis-à-vis de la position cible. Lorsque les dépassements évalués sont inférieurs en magnitude à un seuil TH_os (par exemple, de 20 mètres), le module VAppCmp 517 prend la décision tactique de prendre une marge sur la position cible réelle de l'aéronef suiveur 302, c'est-à-dire en décalant la position cible pour l'éloigner du tourbillon de sillage 303 d'une distance égale à cette marge (par exemple, de 10 mètres pour des dépassements de 20 mètres). Dans un mode de réalisation particulier, le module VAppCmp 517 prend la décision tactique de prendre une telle marge de position uniquement si les dépassements évalués sont supérieurs en magnitude à un seuil TH_mos (avec TH_mos < TH_os). Si les dépassements évalués deviennent supérieurs ou égaux en magnitude au seuil TH_os, le module VAppCmp 517 prend la décision tactique d'éloigner l'aéronef suiveur 302 du tourbillon de sillage 303 de sorte à placer l'aéronef suiveur 302 à une distance minimale du tourbillon de sillage 303 à laquelle l'impact du tourbillon de sillage 303 sur l'aéronef suiveur 302 est nul (à savoir au-delà de la distance seuil Dmax susmentionnée), c'est-à-dire en vol « vortex free ».

Si malgré la décision tactique d'éloigner l'aéronef suiveur 302 du tourbillon de sillage 303 de sorte à placer l'aéronef suiveur 302 à une distance minimale du tourbillon de sillage 303 à laquelle l'impact du tourbillon de sillage 303 sur l'aéronef suiveur 302 est nul, le module VAppCmp 517 détecte que l'aéronef suiveur 302 se rapproche toujours de la fenêtre d'inconfort potentiel en dessous d'un seuil de distance TH_cr (avec TH_cr inférieur à TH_vf), le module VAppCmp 517 prend la décision tactique d'effectuer une manoeuvre échappatoire. La manoeuvre échappatoire consiste préférentiellement à plonger pour rejoindre un niveau de vol (« Flight Level » en anglais) inférieur. On évite ainsi le passage sous le seuil TH_cr, ce qui pourrait générer un inconfort passager encore plus important.

Le module VTrajCmp 519 pourrait être configuré pour calculer d'autres trajectoires candidates. Ces autres trajectoires candidates permettent au module VAppCmp 517 d'évaluer la possibilité pour l'avion suiveur 302 de s'éloigner du tourbillon de sillage 303 à des distances prédéfinies inférieures à la distance seuil Dmax (i.e., sans aller jusqu'à un retour en vol « vortex free »). Le module VAppCmp 517 est alors configuré pour sélectionner une trajectoire optimisée parmi l'ensemble de ces trajectoires candidates.

Dans un mode de réalisation particulier, le module VAppCmp 517 est configuré pour, lorsqu'il détecte que la fenêtre d'inconfort potentiel a des dimensions qui permettent le placement de l'aéronef suiveur 302 à la distance Dconf par rapport à la position estimée du tourbillon de sillage (tout en restant donc en dehors de la fenêtre d'inconfort potentiel), commander à l'aéronef suiveur 302 d'effectuer des mouvements à facteur de charge inférieur à un seuil prédéterminé TH_lf. Ainsi, le système 120 gagne en observabilité sur le tourbillon de sillage 303 de manière confortable, voire imperceptible, pour les passagers de l'aéronef suiveur 302.

Le système 120 comporte en outre un module gestionnaire de contrôle de commandes d'aéronef ACtrlMgr 518, configuré pour convertir chaque trajectoire déterminée par le module VAppCmp 517 en commandes de manoeuvre de l'aéronef suiveur 302. Les commandes de manoeuvre sont alors transmises à un système de gestion de commandes de vol ACtrl 502 (servocommandes) de l'avionique 150, par exemple intégré à un système de pilotage automatique.

Dans un mode de réalisation particulier, le système 120 comporte un module d'alerte WSys 503. En effet, le module VTrajCmp 519 peut être utilisé hors vol en formation. Le système 120 reçoit alors des informations concernant tout autre aéronef dans un rayon prédéfini. Ainsi, le module WSys 503 utilise les trajectoires fournies par le module VTrajCmp 519 pour éviter de croiser un tourbillon de sillage d'un autre avion de manière intempestive (hors vol en formation).

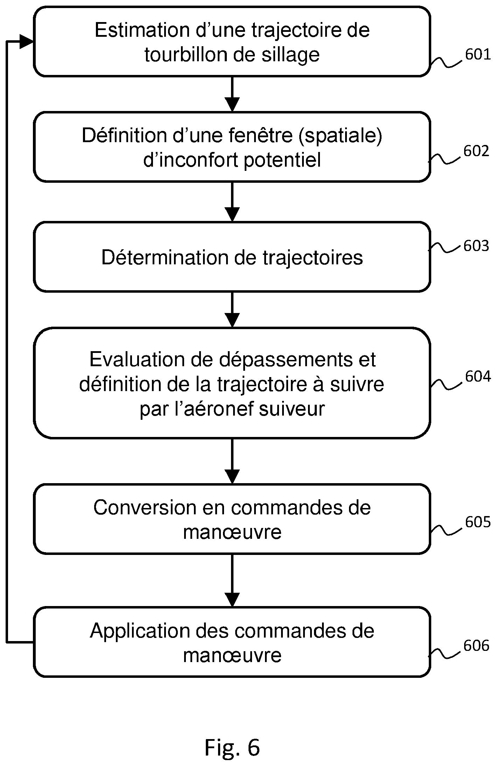

La Fig. 6 illustre schématiquement un algorithme de contrôle de positionnement de l'aéronef suiveur 302 par rapport à l'aéronef meneur 301 lors du vol en formation.

Dans une étape 601, le système 120 effectue une estimation de géométrie du tourbillon de sillage 303 pour lequel l'aéronef suiveur 302 cherche à bénéficier du phénomène de flux ascendant, comme déjà décrit en relation avec le module VPosCmp 516.

Dans une étape 602, le système 120 détermine une fenêtre d'inconfort potentiel pour les passagers de l'aéronef suiveur 302, comme déjà décrit aussi en relation avec le module VPosCmp 516.

Dans une étape 603, le système 120 détermine la première trajectoire susmentionnée, la deuxième trajectoire susmentionnée et éventuellement des trajectoires candidates, comme déjà décrit en relation avec le module VTrajCmp 519. Ces trajectoires sont utilisées par le système 120, et notamment par le module VAppCmp 517 comme décrit ci-dessus, pour déterminer des positions cibles définissant une trajectoire à suivre par l'aéronef suiveur 302 en évitant de pénétrer dans la fenêtre d'inconfort potentiel, les positions cible tenant compte des mouvements à venir du tourbillon de sillage 303 et des capacités de manoeuvre (gains, lois de contrôle, saturation) de l'aéronef suiveur 302 pour limiter l'inconfort de ses passagers.

Dans une étape 604, le système 120 définit la trajectoire à suivre par l'aéronef suiveur 302, à partir des trajectoires déterminées à l'étape 603. Comme déjà expliqué ci-avant en relation avec les modules VTrajCmp 519 et VAppCmp 517, les évaluations de dépassements vis-à-vis de la deuxième trajectoire entraînent éventuellement le système 120 à modifier la première trajectoire, suivie par l'aéronef suiveur 302, par exemple en sélectionnant une trajectoire candidate pour modifier la première trajectoire. La trajectoire définie est convertie en commandes de manoeuvre d'aéronef dans une étape 605 suivante. Cette trajectoire vise à ne pas pénétrer dans la fenêtre d'inconfort potentiel, en anticipant des variations de trajectoire du tourbillon de sillage 303 (vent, manoeuvre de l'aéronef meneur 301).

Au fil du vol, le système 120 continue d'acquérir des mesures effectuées par les capteurs 130. Grâce à ces mesures, le système 120 met à jour la fenêtre d'inconfort potentiel et ajuste en conséquence les trajectoires candidates et donc la trajectoire à suivre.

La collecte en temps réel de nouvelles mesures effectuées par les capteurs 130 dans l'exécution de la trajectoire d'approche vers le tourbillon de sillage 303, et dans la phase de suivi, de mettre à jour en temps réel la position et les dimensions de la fenêtre d'inconfort potentiel. Le module VAppCmp 516 exploite la fenêtre d'inconfort potentiel pour permettre la collecte de données au plus proche du tourbillon de sillage 303, là où elles sont les plus pertinentes pour réduire l'incertitude d'estimation, sans que les passagers de l'aéronef suiveur 302 n'aient à subir d'inconfort.

Dans un mode de réalisation particulier, le système 120 commande à l'aéronef suiveur 302 des mouvements à faible facteur de charge (« load factor » en anglais), c'est-à-dire à facteur de charge inférieur au seuil prédéterminé TH_lf, qui est un seuil au-delà duquel les mouvements de l'aéronef sont considérés inconfortables, ou perceptibles, pour les passagers. Les mouvements en question s'inscrivent dans le plan [Y,Z] (mouvements verticaux et/ou latéraux). Les mouvements en question sont préférentiellement des mouvements oscillatoires ou pseudo-oscillatoires verticaux. Ces mouvements permettent de déplacer l'aéronef suiveur 302 relativement par rapport au tourbillon de sillage 303 et d'acquérir de nouvelles mesures en provenance des capteurs 130 (gain en « observabilité »), afin d'affiner la définition de la fenêtre d'inconfort potentiel.

Dans l'étape 605, le système 120 convertit en commandes de manoeuvre d'aéronef la trajectoire définie à l'étape 604 de sorte à amener l'aéronef suiveur 302 à suivre la trajectoire définie.

Dans une étape 606, le système 120 fait appliquer à l'aéronef suiveur 302 les commandes de manoeuvre obtenues à l'étape 605. L'algorithme reboucle ensuite à l'étape 601, de sorte à prendre en compte les évolutions de la position et de la géométrie du tourbillon de sillage 303, les éventuelles évolutions des conditions atmosphériques, et faire évoluer la fenêtre d'inconfort potentiel en conséquence.

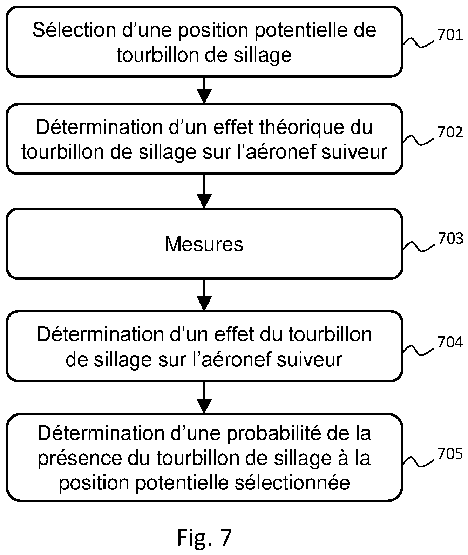

La Fig. 7 illustre schématiquement un algorithme de détermination d'une probabilité de présence d'un tourbillon de sillage à une position donnée, permettant ainsi la détermination de la fenêtre d'inconfort potentiel pour l'aéronef suiveur 302, dans un mode de réalisation particulier adapté à l'utilisation d'un filtre particulaire. Pour ce faire, l'algorithme calcule une distribution de probabilités de localisation spatiale du tourbillon de sillage 303. Pour calculer cette distribution de probabilités, l'algorithme calcule par exemple des vraisemblances.

Dans une étape 701, le système 120 sélectionne une position potentielle du tourbillon de sillage 303 parmi un ensemble de positions potentielles. L'ensemble de positions potentielles est défini par analyse d'incertitude, au vu de la précision d'estimation (e.g., précision du filtre particulaire), ou de manière empirique lors de phases de tests en vol par comparaison de données modélisées et de données de mesures.

Dans un mode de réalisation particulier, le système 120 intègre un filtre particulaire et chaque particule représente une position potentielle du tourbillon de sillage 303 (ou de son centre) dans le repère [Y,Z].

Dans une étape 702, le système 120 détermine un effet théorique du tourbillon de sillage 303 sur l'aéronef suiveur 302, en considérant que le tourbillon de sillage 303 est localisé à la position sélectionnée à l'étape 701. Le système 120 utilise pour ce faire le modèle susmentionné de tourbillon de sillage (fourni par le module VModMgr 515).

Dans une étape 703, le système 120 collecte des mesures effectuées par les capteurs 130, et dans une étape 704, détermine un effet réel sur l'aéronef 302 du tourbillon de sillage 303 grâce aux mesures des capteurs 130 (déterminé par le module AModMgr 513). Dans les mesures des capteurs 130, l'effet du tourbillon de sillage 303 est majoritaire par rapport à d'autres perturbations qui seraient captées par les capteurs 130. L'effet sur ces mesures de ces autres perturbations est donc négligeable.

Dans une étape 705, le système 120 compare l'effet théorique du tourbillon de sillage 303 sur l'aéronef suiveur 302 tel que déterminé à l'étape 702 avec l'effet du tourbillon de sillage 303 sur l'aéronef suiveur 302 tel que déterminé à l'étape 704. La différence entre l'effet théorique du tourbillon de sillage 303 sur l'aéronef suiveur 302 tel que déterminé à l'étape 702 et l'effet du tourbillon de sillage 303 subi par l'aéronef suiveur 302 tel que déterminé à l'étape 704 fournit une valeur de probabilité de la présence du tourbillon de sillage 303 à la position sélectionnée à l'étape 701.

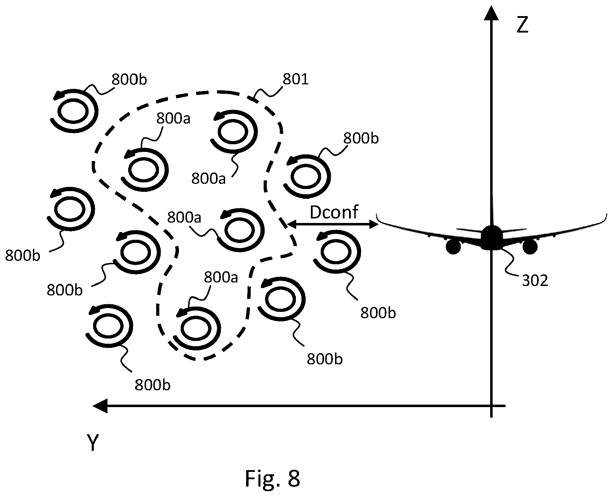

Le système 120 procède ainsi pour chaque position potentielle dudit ensemble de positions potentielles. Une valeur de probabilité (de présence du tourbillon de sillage) est ainsi associée à chaque position potentielle dudit ensemble de positions potentielles. Comme déjà indiqué, la valeur de probabilité peut être calculée pour différentes valeurs de paramètres de tourbillon de sillage (diamètre...). Le système 120 répartit alors les positions potentielles en deux catégories : celles dont la probabilité associée est supérieure ou égale au seuil prédéterminé TH_vx, et celles dont la probabilité associée est inférieure au seuil prédéterminé TH_vx. Un regroupement des positions potentielles dont la probabilité associée est supérieure ou égale au seuil prédéterminé TH_vx forme la fenêtre d'inconfort potentiel susmentionné. La situation est schématiquement illustrée sur la Fig. 8, où des positions potentielles de tourbillon de sillage 800a ont une probabilité associée supérieure ou égale au seuil prédéterminé TH_vx, et sont donc incluses dans la fenêtre d'inconfort potentiel 801, et où des positions potentielles de tourbillon de sillage 800b ont une probabilité associée inférieure au seuil prédéterminé TH_vx, et sont donc exclues de la fenêtre d'inconfort potentiel 801.

La Fig. 9 illustre schématiquement un algorithme de détermination de trajectoires pour l'aéronef suiveur 302, dans un mode de réalisation particulier. L'algorithme est effectué par le système 120, et plus particulièrement par le module VTrajCmp 519, pour chaque trajectoire à déterminer. L'algorithme prend en entrée une géométrie géoréférencée du tourbillon de sillage 303, telle que calculée par le module VPosCmp 516. L'algorithme est donc effectué au moins deux fois, pour déterminer (1) la première trajectoire susmentionnée, et (2) la deuxième trajectoire susmentionnée.

L'algorithme prend notamment en entrée une position courante de l'aéronef suiveur 302 à considérer (position réelle pour la première trajectoire, position virtuelle pour la deuxième trajectoire). L'algorithme utilise une modélisation de l'aéronef suiveur 302, comme par exemple celui utilisé par le module AModMgr 513, de sorte à connaître les capacités de manoeuvre de l'aéronef suiveur 302 en situation et les retours de lois applicables (connaissance des lois de contrôle de l'aéronef suiveur 302 suivant les différents points de vol).

Dans une étape 901, le système 120 initialise la trajectoire relativement au tourbillon de sillage 303, par exemple avec des paramètres aéronef suivants : nombre de Mach, vitesse sol, roulis (phi) réel, roulis commandé, facteur de charge (Nz) réel, facteur de charge commandé, latitude, longitude, azimut... Selon la modélisation utilisée, la trajectoire peut aussi être initialisée avec des paramètres de déflections de gouvernes, de régime moteur, etc. En d'autres termes, la trajectoire est initialisée avec tout paramètre aéronef utile à la modélisation utilisée. La trajectoire est en outre initialisée avec la position cible (en X, Y, Z).

Dans une étape 902, le système 120 effectue une discrétisation temporelle de la trajectoire à déterminer. Un pas de temps, fixe ou variable, prédéfini est utilisé. Le système 120 évalue un temps total de prédiction disponible, c'est-à-dire le temps qui est supposé s'écouler pour que l'aéronef suiveur 302 parcoure en substance la distance couvrant le tourbillon de sillage 303 déjà formé entre l'aéronef meneur 301 et la position de l'aéronef suiveur 302 à considérer. Ce temps total de prédiction disponible dépend de la vitesse de l'aéronef suiveur 302, et de la distance qui sépare l'aéronef suiveur 302 de l'aéronef meneur 301. Par exemple, pour un pas de temps fixe dt = 0.04 secondes, si l'aéronef suiveur 302 est situé 10 secondes derrière l'aéronef meneur 301, et si en outre l'aéronef suiveur 302 et l'aéronef meneur 301 volent à la même vitesse, le système 120 réalise pendant le temps total de prédiction disponible, que l'on peut appeler « cycle calculateur », 10 / 0.04 = 250 microcycles itératifs pour réaliser la détermination de trajectoire.

A chaque microcycle itératif de la discrétisation temporelle de la trajectoire à déterminer, le système 120 effectue des étapes 903 à 906 décrites ci-après. C'est une fois que les étapes 903 à 906 auront été effectuées pour ce microcycle itératif « courant » que le système passe au microcycle itératif suivant. C'est ainsi que la trajectoire est construite point par point, au fur et à mesure des microcycles itératifs.

Dans l'étape 903, le système 120 effectue une prédiction de l'état futur de l'aéronef suiveur 302, pour le microcycle itératif « courant », à partir de l'état courant de l'aéronef suiveur 302 (incluant les commandes appliquées à l'aéronef suiveur 302) et de la modélisation susmentionnée. Un modèle simplifié sur chaque axe durant le temps total de prédiction disponible peut être utilisé pour ce faire.

Dans l'étape 904, le système 120 effectue une prédiction, pour le microcycle itératif d « courant », de la position de l'aéronef suiveur 302 relativement au référentiel géodésique [X, Y, Z]. Le système 120 calcule, pour chaque microcycle itératif de la discrétisation temporelle de la trajectoire à déterminer, les latitudes, longitudes et altitudes prédites de l'aéronef suiveur 302 à partir des vitesses sol, vitesse verticale (Vz) et azimut de l'aéronef suiveur 302.

Dans l'étape 905, le système 120 effectue une prédiction des positions relatives au tourbillon de sillage 303 et des retours de loi. Le système 120 connait les positions actuelles du tourbillon de sillage 303 grâce à l'étape 601. Le système 120 peut donc prédire les positions futures du tourbillon de sillage 303 qui continue de se déplacer sous l'effet du vent et de sa dynamique propre. Le système 120 connait aussi les positions futures de l'avion suiveur, grâce à l'étape 904. Le système 120 peut donc en déduire les positions relatives futures de l'avion suiveur 302 vis-à-vis du tourbillon de sillage 303. On peut donc aussi en déduire les retours avionique futurs de l'aéronef suiveur 302. Ces retours avionique futurs sont utilisés à l'étape 604 pour calculer les commandes de loi pour suivre la position cible avec les gains de loi et saturations du point de vol.

Dans l'étape 906, le système 120 effectue une prédiction des commandes aéronef à appliquer pour suivre les positions déterminées à l'étape 904. Les retours avioniques prédits à l'étape 905 permettent de calculer les commandes avion. Dans l'hypothèse des modèles simplifiés utilisés par le système 120, une commande de roulis (phi) et une commande de facteur de charge (Nz) sont déterminées en utilisant les gains de loi et saturations du point de vol considéré. En d'autres termes, le système 120 utilise un domaine de vol connu et acceptable qui permet d'évaluer comment l'aéronef suiveur 302 va réagir à des perturbations. Le domaine de vol s'entend ici non pas uniquement en termes d'aérodynamique (seuil de rupture de l'avion, seuil de décrochage), mais également en prenant en compte le confort passager (pas trop de roulis, facteur de charge limité...).

Ensuite l'algorithme reboucle à l'étape 903 pour la prise en compte d'un nouveau cycle itératif.

Ainsi, grâce à la connaissance des positions futures du tourbillon de sillage 303 et les positions futures de l'aéronef suiveur 302 ou de l'aéronef fantôme, la première trajectoire ou la deuxième trajectoire est prédite sur un certain temps (ou distance). Dans le cadre de la deuxième trajectoire, l'évaluation des dépassements en fonction des capacités de manoeuvre de l'aéronef suiveur 302 par rapport aux règles de confort de passagers donne une mesure de qualité du suivi de trajectoire. Alors, si la première trajectoire à venir rentre dans la fenêtre d'inconfort, son maintien va devenir inconfortable pour les passagers de l'aéronef suiveur 302 ; et si la qualité de la tenue de trajectoire est mauvaise au regard de la deuxième trajectoire (dépassements importants), le risque pour l'aéronef suiveur 302 d'entrer dans la fenêtre d'inconfort potentiel est élevé à court terme, même s'il n'est pas immédiatement prédit.

## Revendications

1. Procédé d'aide au vol en formation d'aéronefs, le procédé étant implémenté par un système (120) sous forme de circuiterie électronique embarquée dans un aéronef agissant comme aéronef suiveur (302), le procédé comportant les étapes suivantes :
- obtention d'informations relatives à un aéronef meneur (301) générant un tourbillon de sillage (303) induisant un flux d'air ascendant dont le système (120) vise à faire bénéficier l'aéronef suiveur (302) ;
- détermination d'un effet du tourbillon de sillage (303) subi par l'aéronef suiveur (302) comme une différence entre mesures, effectuées par des capteurs (130) de l'aéronef suiveur (302), et une modélisation de l'aéronef suiveur (302) en environnement libre de tourbillon de sillage ;
- détermination d'une position estimée du tourbillon de sillage (303) à partir des informations relatives à l'aéronef meneur (301) obtenues et d'un modèle de tourbillon de sillage, et détermination d'une incertitude d'estimation autour de la position estimée du tourbillon de sillage (303) à partir de l'effet déterminé du tourbillon de sillage (303) subi par l'aéronef suiveur (302) ; et
- détermination de trajectoires comprenant :
une première trajectoire, destinée à être suivie par l'aéronef suiveur (302), en tant que trajectoire d'approche et de suivi du tourbillon de sillage (303), de sorte à chercher à bénéficier du flux ascendant induit par le tourbillon de sillage tout en restant en dehors d'une fenêtre d'inconfort potentiel définie par l'incertitude d'estimation autour de la position estimée du tourbillon de sillage (303) ;
**caractérisé par** la détermination de trajectoires comprenant aussi:
une deuxième trajectoire correspondant à un aéronef fantôme comme si l'aéronef suiveur (302) est en permanence à une position optimale par rapport au tourbillon de sillage (303), à savoir un placement de l'aéronef suiveur (302) à une distance prédéfinie de la position estimée du tourbillon de sillage (303) lorsque la fenêtre d'inconfort potentiel a des dimensions qui le permettent, et à une marge prédéfinie de la fenêtre d'inconfort potentiel sinon ;
et par le procédé comportant aussi les étapes suivantes:
- évaluation de dépassements à venir de l'aéronef fantôme par rapport à des capacités de manoeuvre de l'aéronef suiveur (302) et de règles de confort de passagers, vis-à-vis de la deuxième trajectoire ; et
- modification éventuelle de la première trajectoire, à suivre par l'aéronef suiveur (302), en fonction des dépassements évalués.

2. Procédé selon la revendication 1, dans lequel le système (120) évalue sur la première trajectoire si l'aéronef suiveur (302) se rapproche de la fenêtre d'inconfort potentiel en dessous d'un seuil de distance TH_vf, et lorsque ce seuil TH_vf est atteint, le système (120) prend la décision tactique d'éloigner l'aéronef suiveur (302) du tourbillon de sillage (303) de sorte à placer l'aéronef suiveur (302) à une distance minimale du tourbillon de sillage à laquelle l'impact du tourbillon de sillage (303) sur l'aéronef suiveur est nul.

3. Procédé selon la revendication 1 ou 2, dans lequel, lorsque les dépassements évalués sont inférieurs en magnitude à un seuil TH_os et supérieurs en magnitude à un seuil TH_mos, avec TH_mos < TH_os, le système (120) prend la décision tactique de décaler la position cible pour éloigner l'aéronef suiveur (302) du tourbillon de sillage (303) d'une distance égale à une marge prédéfinie.

4. Procédé selon la revendication 3, dans lequel, si les dépassements évalués deviennent supérieurs ou égaux en magnitude au seuil TH_os, le système (120) prend la décision tactique d'éloigner l'aéronef suiveur (302) du tourbillon de sillage (303) de sorte à placer l'aéronef suiveur (302) à une distance minimale du tourbillon de sillage (303) à laquelle l'impact du tourbillon de sillage (303) sur l'aéronef suiveur (302) est nul.

5. Procédé selon la revendication 2 ou selon l'une des revendications 3 et 4 lorsque la revendication 3 dépend de la revendication 2, dans lequel, si malgré la décision tactique d'éloigner l'aéronef suiveur (302) du tourbillon de sillage (303) de sorte à placer l'aéronef suiveur (302) à une distance minimale du tourbillon de sillage (303) à laquelle l'impact du tourbillon de sillage (303) sur l'aéronef suiveur (302) est nul, le système (120) détecte que l'aéronef suiveur (302) se rapproche de la fenêtre d'inconfort potentiel en dessous d'un seuil de distance TH_cr, le système (120) prend la décision tactique d'effectuer une manoeuvre échappatoire.

6. Procédé selon la revendication 5, dans lequel la manoeuvre échappatoire consiste à plonger pour rejoindre un niveau de vol inférieur.

7. Procédé selon l'une quelconque des revendications 1 à 6, dans lequel chaque trajectoire est déterminée par les étapes suivantes :
- discrétisation temporelle de la trajectoire selon un pas de temps prédéfini, en évaluant un temps total de prédiction disponible correspondant à un temps qui est supposé s'écouler pour que l'aéronef suiveur (302) parcoure en substance la distance correspondant au tourbillon de sillage (303) déjà formé entre l'aéronef meneur (301) et une position courante de l'aéronef suiveur (302) à considérer, de sorte à définir des microcycles itératifs ;
et pour chaque microcycle itératif :
- prédiction d'un état futur de l'aéronef suiveur (302), à partir d'un état courant de l'aéronef suiveur (302) et d'une modélisation de l'aéronef suiveur (302) ;
- prédiction de la position de l'aéronef suiveur (302) relativement à un référentiel géodésique ;
- prédiction des positions de l'aéronef suiveur (302) relativement au tourbillon de sillage (303) et prédiction de commandes pour suivre la position cible.

8. Procédé selon l'une quelconque des revendications 1 à 7, dans lequel la position estimée du tourbillon de sillage (303) et l'incertitude d'estimation sur la position estimée du tourbillon de sillage (303) sont déterminées à l'aide d'un filtre bayésien récursif.

9. Système (120) d'aide au vol en formation d'aéronefs, le système (120) comportant de la circuiterie électronique destinée à être embarquée dans un aéronef agissant comme aéronef suiveur (302), la circuiterie électronique étant configurée pour implémenter les étapes suivantes :
- obtention d'informations relatives à un aéronef meneur (301) générant un tourbillon de sillage (303) induisant un flux d'air ascendant dont le système (120) vise à faire bénéficier l'aéronef suiveur (302) ;
- détermination d'un effet du tourbillon de sillage (303) subi par l'aéronef suiveur (302) comme une différence entre mesures, effectuées par des capteurs (130) de l'aéronef suiveur (302), et une modélisation de l'aéronef suiveur (302) en environnement libre de tourbillon de sillage ;
- détermination d'une position estimée du tourbillon de sillage (303) à partir des informations relatives à l'aéronef meneur (301) obtenues et d'un modèle de tourbillon de sillage, et détermination d'une incertitude d'estimation autour de la position estimée du tourbillon de sillage (303) à partir de de l'effet déterminé du tourbillon de sillage (303) subi par l'aéronef suiveur (302) ; et
- détermination de trajectoires comprenant :
une première trajectoire, destinée à être suivie par l'aéronef suiveur (302), en tant que trajectoire d'approche et de suivi du tourbillon de sillage (303), de sorte à chercher à bénéficier du flux ascendant induit par le tourbillon de sillage tout en restant en dehors d'une fenêtre d'inconfort potentiel définie par une incertitude d'estimation autour de la position estimée du tourbillon de sillage (303) ;
**caractérisé par** la détermination de trajectoires comprenant aussi:
une deuxième trajectoire correspondant à un aéronef fantôme comme si l'aéronef suiveur (302) est en permanence à une position optimale par rapport au tourbillon de sillage (303), à savoir un placement de l'aéronef suiveur (302) à une distance prédéfinie de la position estimée du tourbillon de sillage (303) lorsque la fenêtre d'inconfort potentiel a des dimensions qui le permettent, et à une marge prédéfinie de la fenêtre d'inconfort potentiel sinon ;
et par la circuiterie électronique étant configurée pour implémenter aussi les étapes suivantes :
- évaluation de dépassements à venir de l'aéronef fantôme par rapport à des capacités de manoeuvre de l'aéronef suiveur (302) et de règles de confort de passagers, vis-à-vis de la deuxième trajectoire ; et
- modification éventuelle de la première trajectoire, à suivre par l'aéronef suiveur (302), en fonction des dépassements évalués.

## Patentansprüche

1. Verfahren zur Unterstützung beim Formationsflug von Flugzeugen, wobei das Verfahren von einem System (120) in Form einer elektronischen Schaltungsanordnung implementiert wird, die in ein Flugzeug integriert ist, das als Folgeflugzeug (302) agiert, wobei das Verfahren die folgenden Schritte umfasst:
- Erhalten von Informationen bezüglich eines Führungsflugzeugs (301), das eine Wirbelschleppe (303) erzeugt, die einen aufsteigenden Luftstrom bewirkt, von dem das System (120) das Folgeflugzeug (302) profitieren lassen soll;
- Bestimmen einer Wirkung der Wirbelschleppe (303), der das Folgeflugzeug (302) ausgesetzt ist, als eine Differenz zwischen Messungen, die von Sensoren (130) des Folgeflugzeugs (302) durchgeführt werden, und eine Modellierung des Folgeflugzeugs (302) in einem wirbelschleppenfreien Umfeld;
- Bestimmen einer geschätzten Position der Wirbelschleppe (303) ausgehend von den erhaltenen Informationen bezüglich des Führungsflugzeugs (301) und von einem Wirbelschleppenmodell und Bestimmen einer Schätzunsicherheit um die geschätzte Position der Wirbelschleppe (303) herum ausgehend von der bestimmten Wirkung der Wirbelschleppe (303), der das Folgeflugzeug (302) ausgesetzt ist; und
- Bestimmen von Trajektorien, umfassend:
eine erste Trajektorie, die dazu bestimmt ist, von dem Folgeflugzeug (302) verfolgt zu werden, als Annäherungs-und Verfolgungstrajektorie der Wirbelschleppe (303), so dass versucht wird, von dem durch die Wirbelschleppe bewirkten aufsteigenden Strom zu profitieren und dabei außerhalb eines potenziellen Diskomfortfensters zu bleiben, das durch die Schätzunsicherheit um die geschätzte Position der Wirbelschleppe (303) herum definiert wird;
**gekennzeichnet durch** das Bestimmen von Trajektorien, umfassend auch:
eine zweite Trajektorie, die einem fiktiven Flugzeug entspricht, als ob das Folgeflugzeug (302) permanent in einer optimalen Position in Bezug auf die Wirbelschleppe (303) ist, d. h. eine Positionierung des Folgeflugzeugs (302) in einer vorgegebenen Distanz von der geschätzten Position der Wirbelschleppe (303), wenn das potenzielle Diskomfortfenster Abmessungen hat, die dies ermöglichen, und ansonsten in einem vorgegebenen Spielraum von dem potenziellen Diskomfortfenster;
und durch das Verfahren, das auch die folgenden Schritte beinhaltet:
- Evaluieren von künftigen Überschreitungen des fiktiven Flugzeugs in Bezug auf Manöverkapazitäten des Folgeflugzeugs (302) und von Fluggastkomfortregeln gegenüber der zweiten Trajektorie; und
- gegebenenfalls Ändern der ersten Trajektorie, die von dem Folgeflugzeug (302) zu verfolgen ist, in Abhängigkeit von den evaluierten Überschreitungen.

2. Verfahren nach Anspruch 1, wobei das System (120) die erste Trajektorie evaluiert, wenn sich das Folgeflugzeug (302) dem potenziellen Diskomfortfenster unterhalb eines Distanzschwellenwerts TH_vf nähert, und das System (120), wenn dieser Schwellenwert TH_vf erreicht wird, die taktische Entscheidung trifft, das Folgeflugzeug (302) von der Wirbelschleppe (303) zu entfernen, so dass das Folgeflugzeug (302) in einer minimalen Distanz von der Wirbelschleppe positioniert wird, in der die Auswirkungen der Wirbelschleppe (303) auf das Folgeflugzeug gleich null sind.

3. Verfahren nach Anspruch 1 oder 2, wobei, wenn die evaluierten Überschreitungen vom Umfang her geringer als ein Schwellenwert TH_os und vom Umfang her größer als ein Schwellenwert TH_mos sind, mit TH_mos < TH_os, das System (120) die taktische Entscheidung trifft, die Zielposition zu verlagern, um das Folgeflugzeug (302) von der Wirbelschleppe (303) um eine Distanz gleich einem vorgegebenen Spielraum zu entfernen.

4. Verfahren nach Anspruch 3, wobei, wenn die evaluierten Überschreitungen vom Umfang her größer oder gleich dem Schwellenwert TH_os werden, das System (120) die taktische Entscheidung trifft, das Folgeflugzeug (302) von der Wirbelschleppe (303) zu entfernen, so dass das Folgeflugzeug (302) in einer minimalen Distanz von der Wirbelschleppe (303) positioniert wird, in der die Auswirkungen der Wirbelschleppe (303) auf das Folgeflugzeug (302) gleich null sind.

5. Verfahren nach Anspruch 2 oder nach einem der Ansprüche 3 und 4, wenn Anspruch 3 von Anspruch 2 abhängig ist, wobei, falls trotz der taktischen Entscheidung, das Folgeflugzeug (302) von der Wirbelschleppe (303) zu entfernen, so dass das Folgeflugzeug (302) in einer minimalen Distanz von der Wirbelschleppe (303) positioniert wird, in der die Auswirkungen der Wirbelschleppe (303) auf das Folgeflugzeug (302) gleich null sind, das System (120) detektiert, dass sich das Folgeflugzeug (302) dem potenziellen Diskomfortfenster unterhalb eines Distanzschwellenwerts TH_cr nähert, das System (120) die taktische Entscheidung trifft, ein Ausweichmanöver durchzuführen.

6. Verfahren nach Anspruch 5, wobei das Ausweichmanöver darin besteht zu sinken, um eine geringere Flughöhe zu erreichen.

7. Verfahren nach einem der Ansprüche 1 bis 6, wobei jede Trajektorie durch die folgenden Schritte bestimmt wird:
- zeitliche Diskretisierung der Trajektorie gemäß einem vorgegebenen Zeitschritt, indem eine verfügbare Vorhersagegesamtzeit evaluiert wird, die einer Zeit entspricht, die angenommenerweise verstreicht, damit das Folgeflugzeug (302) die Distanz, die der Wirbelschleppe (303) entspricht, die sich zwischen dem Führungsflugzeug (301) und einer aktuellen Position des zu betrachtenden Folgeflugzeugs (302) bereits gebildet hat, im Wesentlichen zurücklegt, so dass iterative Mikrozyklen definiert werden;
und für jeden iterativen Mikrozyklus:
- Vorhersagen eines zukünftigen Zustands des Folgeflugzeugs (302) ausgehend von einem aktuellen Zustand des Folgeflugzeugs (302) und von einer Modellierung des Folgeflugzeugs (302);
- Vorhersagen der Position des Folgeflugzeugs (302) relativ zu einem geodätischen Bezugssystem;
- Vorhersagen der Positionen des Folgeflugzeugs (302) relativ zu der Wirbelschleppe (303) und Vorhersagen von Kommandos, um die Zielposition zu verfolgen.

8. Verfahren nach einem der Ansprüche 1 bis 7, wobei die geschätzte Position der Wirbelschleppe (303) und die Schätzunsicherheit für die geschätzte Position der Wirbelschleppe (303) mithilfe eines rekursiven Bayesschen Filters bestimmt werden.

9. System (120) zur Unterstützung beim Formationsflug von Flugzeugen, wobei das System (120) eine elektronische Schaltungsanordnung umfasst, die dazu bestimmt ist, in ein Flugzeug integriert zu werden, das als Folgeflugzeug (302) agiert, wobei die elektronische Schaltungsanordnung dazu ausgestaltet ist, die folgenden Schritte zu implementieren:
- Erhalten von Informationen bezüglich eines Führungsflugzeugs (301), das eine Wirbelschleppe (303) erzeugt, die einen aufsteigenden Luftstrom bewirkt, von dem das System (120) das Folgeflugzeug (302) profitieren lassen soll;
- Bestimmen einer Wirkung der Wirbelschleppe (303), der das Folgeflugzeug (302) ausgesetzt ist, als eine Differenz zwischen Messungen, die von Sensoren (130) des Folgeflugzeugs (302) durchgeführt werden, und eine Modellierung des Folgeflugzeugs (302) in einem wirbelschleppenfreien Umfeld;
- Bestimmen einer geschätzten Position der Wirbelschleppe (303) ausgehend von den erhaltenen Informationen bezüglich des Führungsflugzeugs (301) und von einem Wirbelschleppenmodell und Bestimmen einer Schätzunsicherheit um die geschätzte Position der Wirbelschleppe (303) herum ausgehend von der bestimmten Wirkung der Wirbelschleppe (303), der das Folgeflugzeug (302) ausgesetzt ist; und
- Bestimmen von Trajektorien, umfassend:
eine erste Trajektorie, die dazu bestimmt ist, von dem Folgeflugzeug (302) verfolgt zu werden, als Annäherungs-und Verfolgungstrajektorie der Wirbelschleppe (303), so dass versucht wird, von dem durch die Wirbelschleppe bewirkten aufsteigenden Strom zu profitieren und dabei außerhalb eines potenziellen Diskomfortfensters zu bleiben, das durch die Schätzunsicherheit um die geschätzte Position der Wirbelschleppe (303) herum definiert wird;
**gekennzeichnet durch** das Bestimmen von Trajektorien, umfassend auch:
eine zweite Trajektorie, die einem fiktiven Flugzeug entspricht, als ob das Folgeflugzeug (302) permanent in einer optimalen Position in Bezug auf die Wirbelschleppe (303) ist, d. h. eine Positionierung des Folgeflugzeugs (302) in einer vorgegebenen Distanz von der geschätzten Position der Wirbelschleppe (303), wenn das potenzielle Diskomfortfenster Abmessungen hat, die dies ermöglichen, und ansonsten in einem vorgegebenen Spielraum von dem potenziellen Diskomfortfenster;
und durch die elektronische Schaltungsanordnung, die dazu ausgestaltet ist, auch die folgenden Schritte zu implementieren:
- Evaluieren von künftigen Überschreitungen des fiktiven Flugzeugs in Bezug auf Manöverkapazitäten des Folgeflugzeugs (302) und von Fluggastkomfortregeln gegenüber der zweiten Trajektorie; und
- gegebenenfalls Ändern der ersten Trajektorie, die von dem Folgeflugzeug (302) zu verfolgen ist, in Abhängigkeit von den evaluierten Überschreitungen.

## Claims

1. Method for assisting the formation flight of aircraft, the method being implemented by a system (120) in the form of electronic circuitry on board an aircraft acting as a follower aircraft (302), the method comprising the following steps:
- acquiring information relating to a leader aircraft (301) generating a wake vortex (303) inducing an upward airflow, which the system (120) intends the follower aircraft (302) to benefit from;
- determining an effect of the wake vortex (303) experienced by the follower aircraft (302) as a difference between measurements, taken by sensors (130) of the follower aircraft (302), and modelling of the follower aircraft (302) in a wake vortex-free environment;
- determining an estimated position of the wake vortex (303) from the acquired information relating to the leader aircraft (301) and from a wake vortex model, and determining an estimation uncertainty around the estimated position of the wake vortex (303) from the determined effect of the wake vortex (303) experienced by the follower aircraft (302); and
- determining trajectories comprising:
a first trajectory, intended to be followed by the follower aircraft (302), as a trajectory for approaching and tracking the wake vortex (303), so as to seek to benefit from the upward flow induced by the wake vortex, while remaining outside a potential discomfort window defined by the estimation uncertainty around the estimated position of the wake vortex (303);
**characterized by** determining trajectories also comprising:
a second trajectory corresponding to a phantom aircraft as if the follower aircraft (302) is permanently in an optimal position relative to the wake vortex (303), namely a placement of the follower aircraft (302) at a predefined distance from the estimated position of the wake vortex (303) when allowed by the dimensions of the potential discomfort window, and otherwise at a predefined margin from the potential discomfort window; and by the method also comprising the following steps:
- assessing future overshoots of the phantom aircraft relative to manoeuvring capabilities of the follower aircraft (302) and to passenger comfort rules, with respect to the second trajectory; and
- possibly modifying the first trajectory to be followed by the follower aircraft (302) as a function of the assessed overshoots.

2. Method according to Claim 1, wherein the system (120) assesses the first trajectory to determine whether the follower aircraft (302) approaches the potential discomfort window below a distance threshold TH_vf, and, when this threshold TH_vf is reached, the system (120) makes a tactical decision to move the follower aircraft (302) away from the wake vortex (303) so as to place the follower aircraft (302) at a minimum distance from the wake vortex at which the impact of the wake vortex (303) on the follower aircraft is null.

3. Method according to Claim 1 or 2, wherein, when the assessed overshoots are smaller in magnitude than a threshold TH_os and are greater in magnitude than a threshold TH_mos, with TH_mos < TH_os, the system (120) makes a tactical decision to shift the target position in order to move the follower aircraft (302) away from the wake vortex (303) by a distance that is equal to a predefined margin.

4. Method according to Claim 3, wherein, if the assessed overshoots become greater than or equal in magnitude to the threshold TH_os, the system (120) makes a tactical decision to move the follower aircraft (302) away from the wake vortex (303) so as to place the follower aircraft (302) at a minimum distance from the wake vortex (303) at which the impact of the wake vortex (303) on the follower aircraft (302) is null.

5. Method according to Claim 2 or according to either of Claims 3 and 4 when Claim 3 is dependent on Claim 2, wherein, if, despite the tactical decision to move the follower aircraft (302) away from the wake vortex (303) so as to place the follower aircraft (302) at a minimum distance from the wake vortex (303) at which the impact of the wake vortex (303) on the follower aircraft (302) is null, the system (120) detects that the follower aircraft (302) is approaching the potential discomfort window below a distance threshold TH_cr, the system (120) makes a tactical decision to perform an evasive manoeuvre.

6. Method according to Claim 5, wherein the evasive manoeuvre involves diving in order to join a lower flight level.

7. Method according to any one of Claims 1 to 6, wherein each trajectory is determined by the following steps:
- time discretization of the trajectory according to a predefined time step, by assessing a total available prediction time corresponding to a time that is supposed to elapse in order for the follower aircraft (302) to substantially cover the distance corresponding to the wake vortex (303) already formed between the leader aircraft (301) and a current position of the follower aircraft (302) to be considered, so as to define iterative microcycles;
and, for each iterative microcycle:
- predicting a future state of the follower aircraft (302) from a current state of the follower aircraft (302) and modelling of the follower aircraft (302);
- predicting the position of the follower aircraft (302) relative to a geodetic reference frame;
- predicting the positions of the follower aircraft (302) relative to the wake vortex (303) and predicting commands for tracking the target position.

8. Method according to any one of Claims 1 to 7, wherein the estimated position of the wake vortex (303) and the estimation uncertainty concerning the estimated position of the wake vortex (303) are determined using a recursive Bayesian filter.

9. System (120) for assisting the formation flight of aircraft, the system (120) comprising electronic circuitry intended to be placed on board an aircraft acting as a follower aircraft (302), the electronic circuitry being configured to implement the following steps:
- acquiring information relating to a leader aircraft (301) generating a wake vortex (303) inducing an upward airflow, which the system (120) intends the follower aircraft (302) to benefit from;
- determining an effect of the wake vortex (303) experienced by the follower aircraft (302) as a difference between measurements, taken by sensors (130) of the follower aircraft (302), and modelling of the follower aircraft (302) in a wake vortex-free environment;
- determining an estimated position of the wake vortex (303) from the acquired information relating to the leader aircraft (301) and from a wake vortex model, and determining an estimation uncertainty around the estimated position of the wake vortex (303) from the determined effect of the wake vortex (303) experienced by the follower aircraft (302); and
- determining trajectories comprising:
a first trajectory, intended to be followed by the follower aircraft (302), as a trajectory for approaching and tracking the wake vortex (303), so as to seek to benefit from the upward flow induced by the wake vortex, while remaining outside a potential discomfort window defined by an estimation uncertainty around the estimated position of the wake vortex (303);
**characterized by** determining trajectories also comprising:
a second trajectory corresponding to a phantom aircraft as if the follower aircraft (302) is permanently in an optimal position relative to the wake vortex (303), namely a placement of the follower aircraft (302) at a predefined distance from the estimated position of the wake vortex (303) when allowed by the dimensions of the potential discomfort window, and otherwise at a predefined margin from the potential discomfort window; and by the electronic circuitry being configured also to implement the following steps:
- assessing future overshoots of the phantom aircraft relative to manoeuvring capabilities of the follower aircraft (302) and to passenger comfort rules, with respect to the second trajectory; and
- possibly modifying the first trajectory to be followed by the follower aircraft (302) as a function of the assessed overshoots.
